(19) Europäisches Patentamt
European Patent Office
Office européen des brevets

(11) Veröffentlichungsnummer: **0 244 792**
**B1**

(12) # EUROPÄISCHE PATENTSCHRIFT

(45) Veröffentlichungstag der Patentschrift: **07.11.90**

(51) Int. Cl.$^5$: **C 09 D 5/44**, C 09 D 133/04

(21) Anmeldenummer: **87106396.2**

(22) Anmeldetag: **02.05.87**

(54) **Härterkomponente für ofentrocknende Lackbindemittel und Verfahren zu deren Herstellung.**

(30) Priorität: **09.05.86 AT 1235/86**
**09.05.86 AT 1236/86**

(43) Veröffentlichungstag der Anmeldung:
**11.11.87 Patentblatt 87/46**

(45) Bekanntmachung des Hinweises auf die Patenterteilung:
**07.11.90 Patentblatt 90/45**

(84) Benannte Vertragsstaaten:
**BE DE ES FR GB IT NL SE**

(56) Entgegenhaltungen:
**EP-A-0 082 291**
**EP-A-0 131 127**

(73) Patentinhaber: **Vianova Kunstharz Aktiengesellschaft**
**A-8402 Werndorf (AT)**

(72) Erfinder: **Schmölzer, Gerhard, Dr.**
**Eisteichgasse 37**
**A-8010 Graz (AT)**
Erfinder: **Schipfer, Rudolf, Dr.**
**Ernst Haeckelstrasse 53**
**A-8010 Graz (AT)**
Erfinder: **Daimer, Wolfgang, Dipl.-Ing.**
**Rosenberggürtel 37**
**A-8010 Graz (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 244 792 B1**

Courier Press, Leamington Spa, England.

**Beschreibung**

Die in der vorliegenden Anmeldung beschriebene Erfindung betrifft Härterkomponenten für ofentrocknende Lackbindemittel, welche aufgrund ihres Aufbaus durch Umesterung und/oder Umamidierung vernetzt werden können, sowie das Verfahren zur Herstellung dieser Härterkomponenten und ihre Verwendung, insbesonders zur Formulierung von kathodisch abscheidbaren Lacken.

In der EP—B1—01 31 127 wird ein Verfahren zur Herstellung von Vernetzungskomponenten für durch Umesterung und/oder Umamidierung vernetzbare Lackbindemittel beschrieben, welches dadurch gekennzeichnet ist, daß man Verbindungen der Struktur

$$X—CH_2—COOR$$

wobei

X — COOR, —CN oder —$COCH_3$ und

R — eine Alkylgruppe mit 1 bis 8 Kohlenstoffatomen darstellt, vorzugsweise die Diester der Malonsäure mit Alkanolen mit bis 1 bis 4 Kohlenstoffatomen, mit einer Carbonylverbindung, vorzugsweise Formaldehyd, insbesondere Paraformaldehyd, unter Wasserabspaltung im Sinne einer KNOEVENAGEL-Reaktion umsetzt und die entstehende alphadisubstituierte Alkylidenverbindung zu einer oligomeren oder polymeren Verbindung mit einem Molekulargewicht zwischen 300 und 6000 polymerisiert.

Bei der Weiterführung dieser Arbeiten zur weiteren Verbesserung der Filmeigenschaften, die bei Verwendung dieser Härterkomponenten erzielbar sind, wurde nun gefunden, daß die gemäß der Reaktion

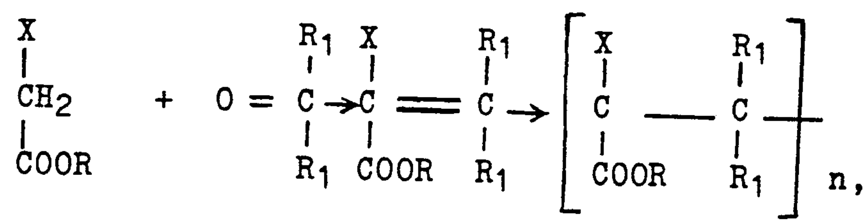

erhaltenen Verbindungen, wobei X und R die oben angegebene Bedeutung haben, $R_1$ ein Wasserstoffatom oder einen Alkylrest bedeutet und n ein Faktor ist, welcher die Einheit bis zu einem Molekulargewicht zwischen 300 und 6000 vervielfacht, in Form ihrer partiellen Umesterungsprodukte mit Di- oder Polyolen oder ihrer partiellen Umamidierungsprodukte mit Di- oder Polyaminen zu hinsichtlich ihrer Filmbildungscharakteristik verbesserten Produkten führen.

Die vorliegende Erfindung betrifft demgemäß Vernetzungskomponenten für durch Umesterung und/oder Umamidierung vernetzbare Lackbindemittel, welche dadurch gekennzeichnet sind, daß sie

(a1) aus Verbindungen der Formel

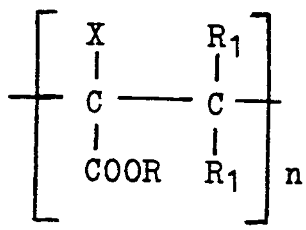 (I)

wobei

X —COOR, —CN oder —$COCH_3$

R eine Alkylgruppe mit 1 bis 8 C-Atomen

$R_1$ ein Wasserstoffatom oder einen Alkylrest und

n einen Faktor, welcher die Einheit bis zu einem Molekulargewicht zwischen 300 und 6000 vervielfacht,

bedeutet, durch partielle Umesterung mit 0,1 bis 1,4 Hydroxyläquivalenten eines zweiwertigen und/oder mehrwertigen Alkanols oder durch partielle Umamidierung mit 0,05 bis 1,0 NH-Äquivalenten eines primären und/oder sekundären Amins pro 1 Mol der Verbindung (I) oder

(a2) aus Verbindungen der Formel

$$X—CH_2—COOR \qquad (II)$$

wobei X und R die oben angegebene Bedeutung haben, deren Estergruppen zu 5 bis 80% mit einem

zweiwertigen und/oder mehrwertigen Alkanol partiell umgeestert oder mit einem zweiwertigen und/oder mehrwertigen Amin partiell umamidiert und die so erhaltenen Zwischenprodukt einer KNOEVENAGEL-Reaktion mit einer Carbonylverbindung unterworfen wurden, erhalten wurden,
wobei die nach (a1) und (a2) erhaltenen Produkte ein Molekulargewicht (Gewichtsmittel, ermittelt durch Gelpermeationschromatographie) zwischen 1000 und 8000 aufweisen.

Weiters betrifft die vorliegende Erfindung ein Verfahren zur Herstellung von Vernetzungskomponenten für durch Umesterung und/oder Umamidierung vernetzbare Lackbindemittel, welches dadurch gekennzeichnet ist, daß man

(a1) oligomere KNOEVENAGEL-Reaktionsprodukte der Formel

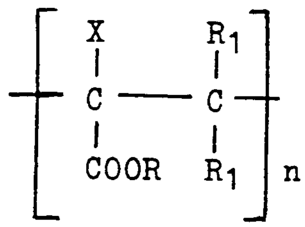

(I)

wobei
X —COOR, —CN oder —$COCH_3$
R eine Alkylgruppe mit 1 bis 8 C-Atomen
$R_1$ ein Wasserstoffatom oder einen Alkylrest und
n einen Faktor, welcher die Einheit bis zu einem Molekulargewicht zwischen 300 und 6000 vervielfacht,
bedeutet,
bei 130 bis 185°C mit 0,1 bis 1,4 Hydroxyläquivalenten eines zweiwertigen und/oder mehrwertigen Alkanols umestert oder mit 0,05 bis 1,0 NH-Äquivalenten eines primären und/oder sekundären Amins pro Mol der Verbindung (I) umamidiert oder

(a2) 5 bis 80% der Estergruppen einer Verbindung

$$X—CH_2—COOR$$

wobei X und R die oben angegebene Bedeutung haben, bei 100 bis 200°C mit einem zweiwertigen und/oder mehrwertigen Alkanol umestert oder mit einem zweiwertigen oder mehrwertigen Amin umamidiert und die so erhaltenen Zwischen produkt mit einer Carbonylverbindung im Sinne einer KNOEVENAGEL-Reaktion umsetzt und polymerisiert,
wobei sowohl nach (a1) als auch nach (a2) die Reaktion so geführt wird, daß die Produkte ein Molekulargewicht (Gewichtsmittel, ermittelt durch Gelpermeationschromatographie) zwischen 1000 und 8000 aufweisen.

Die Erfindung betrifft weiters die Verwendung der erfindungsgemäßen Lackbindemittel in Kombination mit Hydroxyl- und/oder primäre und/oder sekundäre Aminogruppen aufweisenden kationischen Harzen in Einbrennlacken, insbesonders in kathodisch abscheidbaren Elektroauchlacken.

Gegenüber den Bindemittelzusammensetzungen, welche mit den Vernetzungskomponenten der EP—B1—0 131 127 formuliert werden, lassen sich durch die erfindungsgemäßen Vernetzungskomponenten wesentliche Eigenschaften der daraus hergestellten Überzugsmittel beeinflussen. Dies betrifft insbesonders die Kriterien, wie sie bei elektrisch abscheidbaren Zusammensetzungen gefordert werden, z.B. Schichtaufbau, Umgriffsverhalten und Oberflächenausbildung des Films während des Vernetzungsvorganges. Ebenso kann auch durch geeignete Auswahl der Reaktionspartner die Härtungscharakteristik, aber auch die Haftung der Überzugsmittel auf dem Substrat bzw. zur nachfolgenden Schicht beeinflußt werden.

Insbesonders können durch das erfindungsgemäße Verfahren die für kathodisch abscheidbare Bindemittel günstigen Amidgruppen in die Vernetzungskomponente eingebaut werden. Durch Modifizierung der Alkohole bzw. der Amine mit Isocyanatverbindungen ist es auch möglich, Urethan- oder Harnstoffgruppierungen einzuführen.

Die als Ausgangsmaterial für das Verfahren (a1) eingesetzten oligomeren KNOEVENAGEL-Reaktionsprodukte der Formel (I) werden entsprechend den Angaben der EP—B1—0 131 127 durch Polymerisation von alpha-disubstituierten Alkylidenverbindungen, welche durch Umsetzung von Verbindungen der Struktur

$$X—CH_2—COOR$$

wobei
X COOR, —CN oder —$COCH_3$ und
R eine Alkylgruppe mit 1 bis 8 Kohlenstoffatomen

darstellt, mit einer Carbonylverbindung, vorzugsweise Formaldehyd, unter Abspaltung von Wasser erhalten wurden, hergestellt.

Für die Verfahren gemäß der vorliegenden Anmeldung werden vorzugsweise die Diester der Malonsäure (X = COOR) mit Alkanolen mit 1 bis 4 C-Atomen, wie Dimethylmalonat, Diethylmalonat, n- oder iso-Propylmalonat eingesetzt. In gleicher Weise können auch die Alkyl- oder Cycloalkylester der Cyanessigsäure, wie Cyanessigsäuremethyl-, ethyl-, propyl-, butyl-, cyclopentyl-, cyclohexylester oder der Acetessigsäuremethyl- oder -ethylester eingesetzt werden.

Als Carbonylverbindung wird Formaldehyd, insbesondere in seiner polymerisierten Form (Paraformaldehyd) eingesetzt. Die Verwendung höherer Aldehyde ist zwar möglich, bringt jedoch gegenüber dem preisgünstigen und überall zur Verfügung stehenden Formaldehyd keine Vorteile. Weiters können auch Ketone, z.B. das Methylisobutylketon oder Cyclohexanon zum Einsatz gelangen.

Die Herstellung der Oligomeren erfolgt vorteilhaft in der Weise, daß der Paraformaldehyd bei 60 bis 70°C portionsweise dem Ester zugegeben und in diesem gelöst wird. Als Katalysator für die Reaktion wird dem Ester eine Mischung aus Piperidin und Ameisensäure in einer Menge von etwa 0,1 bis 1 Mol-% zugesetzt. Die Reaktionstemperatur soll bis zur vollständigen Auflösung des Paraformaldehyds 90°C nicht überschreiten. Anschließend wird die Temperatur langsam erhöht und das entstehende Reaktionswasser bei 120—150°C durch azeotrope Destillation mit einem Schleppmittel, z.B. einem aliphatischen oder einem aromatischen Kohlenwasserstoff, aus dem Reaktionsgemisch entfernt. Die Reaktion wird anhand des gebildeten Reaktionswassers verfolgt. Die gleichzeitig ablaufende Polymerisation wird durch Bestimmung des Brechungsindexes oder des Viskositätsverlaufes kontrolliert.

Die Polymerisation kann gegebenenfalls durch Zugabe von peroxidischen Initiatoren vervollständigt werden. Die Härterkomponente kann nach Entfernung des Schleppmittels in weitgehend lösungsmittelfreier Form eingesetzt werden. Gegebenenfalls ist es vorteilhaft, inerte Lösungsmittel zur bessern Handhabung bzw. Verteilung im Basisharz einzusetzen. Die Produkte weisen Molekulargewichte zwischen ca. 300 und ca. 6000 auf.

Diese Reaktionsprodukte werden entsprechend der Variante (a1) mit 0,1 bis 1,4 Hydroxyläquivalenten eines zwei- und/oder mehrwerigen Alkanols pro 1 Mol KNOEVENAGEL-Reaktionsprodukt umgesetzt. Ebenso kann für die Molekülvergrößerung auch eine Umamidierungsreaktion mit 0,05 bis 1,0 NH-Äquivalenten eines primären und/oder sekundären Amins pro 1 Mol des Reaktionsproduktes herangezogen werden. Die Ausgangsstoffe werden so gewählt, daß das Molekulargewicht (Gewichtsmittel) der so erhaltenen Vernetzungskomponente zwischen 1000 und 8000 liegt. Die Bestimmung des Molekulargewichts erfolgt vorteilhafterweise über die Gelpermeationschromatographie.

Die Reaktion zwischen dem Reaktionsprodukt und der Alkanol- bzw. Aminkomponente erfolgt bei 130 bis 185°C, wobei der Reaktionsfortgang durch die Menge des abgespaltenen Alkohols, sowie durch die Grenzviskositätszahl[η] 20°C/DMF verfolgt werden kann.

Als zweiwertige Alkohole können geradkettige oder verzweigte Alkandiole, wie Ethylenglykol, seine Homologen und deren Isomeren eingesetzt werden. In gleicher Weise können auch Polyetherdiole, wie Di- oder Polyalkylenglykole oder Polycaprolactondiole oder Ringstrukturen enthaltende Diole, wie das 1,1'-Isopropyliden-bis-(p-phenylen-oxy)-di-ethanol-2 (DIANOL 22) oder das Tricyclodecandimethanol (TCD-Alkohol DM) verwendet werden.

Als höherwertige Alkhole werden die Trimethylolalkane oder Pentaerythrit verwendet. Weitere Di- oder Polyole lassen sich durch einfache Reaktionen herstellen. Beispielsweise sie hier auf Umsetzungsprodukte von Monoepoxidverbindungen mit sekundären Alkanolaminen oder Hydroxycarbonsäuren, z.B. Dimethylolpropionsäure oder von Diaminen mit Alkylencarbonaten hingewiesen. Ähnliche, zu Di- oder Polyolen führende Reaktionen sind dem Fachmann bekannt.

Zur Einführung von Urethangruppierungen können als Diol- bzw. Polyolkomponente auch Umsetzungsprodukte aus Isocyanatverbindungen und den obengenannten Alkoholen verwendet werden.

Für eine Umamidierung werden insbesonders primäre und sekundäre aliphatische Amine eingesetzt. Daneben können primäre und sekundäre Alkanolamine, z.B. Monomethylethanolamin, 2-Amino-2-ethylpropandiol, Monoethanolamin etc. und cyclische Polyamine, wie. z.B. Hydroxyethylpiperazin oder Aminoethylpiperazin bei der Umamidierungsreaktion eingesetzt werden.

Bei der erfindungsgemäßen Herstellung der Vernetzungskomponente nach der Verfahrensvariante (a2) werden in einer ersten Reaktionsstufe 5 bis 80% der Estergruppen der aktive Methylengruppen aufweisenden Ester der Formel $X—CH_2—COOR$, wobei X und R die im Anspruch angegebene Bedeutung haben, mit Di- und/oder Polyolen und/oder Di- und/oder Polyaminen unter Umesterung bzw. Umamidierung bei 100 bis 200°C reagiert. Die Reaktionen verlaufen unter Abspaltung des Alkohols R—OH, welcher vorteilhafterweise über eine Glockenbodenkolonne aus dem Reaktionsgemisch entfernt wird. Der Reaktionsverlauf kann über die Destillatmenge oder den Brechungsindex des Reaktionsproduktes verfolgt werden.

Als Alkoholkomponente werden die gleichen Verbindungen eingesetzt, wie sie bei der Verfahrensvariante (a1) genannt wurden. Als Amine werden geradkettige oder verzweigte Alkylendiamine und -polyamine eingesetzt, soferne die Verbindungen primäre und/oder sekundäre Aminogruppen aufweisen. Weiters können auch entsprechende Alkanolamine für das erfindungsgemäße Verfahren verwendet werden. Beispielsweise werden Ethylendiamin und seine Homologen, Isophorondiamin,

Diethylentriamin u. ä. genannt. Umsetzungsprodukte der genannten Amine mit Isocyanatverbindungen können zum Einbau von Harnstoffgruppen in die Vernetzungskomponente dienen.

Wie bei der Verfahrensvariante (a1) wird das Reaktionsprodukt in Gegenwart von Katalysatoren (üblicherweise einer Mischung aus Piperidin oder Dicyclohexylamin und Ameisensäure) mit der Carbonylverbindung, vorzugsweise mit Formaldehyd in Form eines Paraformaldehyds mit 90 bis 100% $CH_2O$-Gehalt, in Sinne der KNOEVENAGEL-Reaktion umgesetzt. Vorteilhafterweise wird dabei das Ester-Katalysatorgemisch bei 60 bis 90°C portionsweise dem Paraformaldehyd zugesetzt. Die Reaktionstemperatur soll bis zur vollständigen Auflösung des Paraformaldehyds 90°C nicht überschreiten. Anschließend wird die Temperatur auf 100°C gesteigert und diese Temperatur so lange gehalten, bis der Gehalt an freiem Formaldehyd unter 0,5% gesunken ist. Anschließend wird, unter Verwendung eines Schleppmittels, das Reaktionswasser abdestilliert und die Reaktionstemperatur weiter gehalten, bis die gewünschte Viskosität bzw. der Brechungsindex erreicht ist. Die Reaktion wird dabei so weit getrieben, daß die Vernetzungskomponenten ein Molekulargewicht (Gewichtsmittel; bestimmt durch Gelpermeationschromatographie) von etwa 1000 bis 8000 aufweisen.

Es war überraschend, daß die KNOEVENAGEL-Reaktion auch bei Verwendung dieser Zwischenprodukte in einwandfreier und kontrollierbarer Weise erfolgt.

Die erfindungsgemäß hergestellten Vernetzungskomponenten werden in Kombination mit Basisharzen, welche zu einer Umesterung oder Umamidierung befähigt sind, eingesetzt. Insbesonders können die erfindungsgemäß hergestellten Produkte in wasserverdünnbaren Lacksystemen eingesetzt werden. Als besonders vorteilhaft haben sich diese Vernetzungskomponenten für kathodisch abscheidbare Überzugsmittel erwiesen, wobei die hohe Reaktivität ver Vernetzungskomponenten in vielen Fällen eine Herabsetzung der Einbrenntemperatur auf 130 bis 160°C gestattet.

Als Basisharze können Produkte eingesetzt werden, welche über eine ausreichende Anzahl veresterungsfähiger bzw. amidierungsfähiger Gruppen verfügen, um eine genügende Vernetzung des Lackfilms zu gewährleisten. Harze dieser Art sind in der EP—00 12 463 oder in der AT—PS 372 099 beschrieben. Bevorzugt werden Harze auf der Basis von Epoxidharzen eingesetzt, wobei insbesonders für die kathodische Abscheidung Epoxidharz-Amin-Addukte, welche gegebenenfalls im Sinne einer inneren Flexibilisierung modifiziert sein können, in Frage kommen. Weitere bevorzugte Basisharze sind Copolymere, welche entweder durch Verwendung entsprechender Monomerer oder durch nachträgliche Modifizierung über eine ausreichende Anzahl protonisierbarer Gruppen verfügen.

Zur Erzielung einer ausreichenden Wasserverdünnbarkeit nach teilweiser oder vollständiger Neutralisation mit Säuren weisen die Basisharze eine Aminzahl zwischen 20 und 150 mg KOH/g auf. Die Zahl der umesterungs- oder umamidierungsfähigen Gruppen soll 40 bis 500 mg KOH/g entsprechen.

In einer besonderen Ausführungsform der Erfindung werden das Basisharz und die Vernetzungskomponente bei 80 bis 140°C einer partiellen Vorkondensation unterworfen. In kritischen Fällen kann dadurch die Phasenverträglichkeit zwischen den Komponenten wesentlich verbessert werden, womit einer Phasentrennung, auch bei längerer Lagerung der Bindemittel bzw. der Überzugsmittel, vorgebeugt wird.

Die Kombination der Komponenten erfolgt in einem Verhältnis von 60 bis 95 Gew.-% des Basisharzes und 5 bis 40 Gew.-% der erfindungsgemäß hergestellten Vernetzungskomponente. Besonders bevorzugt sind Mischungsverhältnisse von 70 bis 85 Gew.-% Basisharz und 15 bis 30 Gew.-% Vernetzungskomponente.

Die Verarbeitung der Bindemittelzusammensetzungen zu wasserverdünnbaren Überzugsmitteln, d.h. die Neutralisation mit Säure, die Verdünnung auf die Applikationsform oder die in den meisten Fällen erfolgende Einarbeitung von Pigmenten und Füllstoffen, sind dem Fachmann ebenso bekannt wie die möglichen Applikationsformen. Ein bevorzugter Einsatzbereich der Überzugsmittel, welche die erfindungsgemäße Vernetzungskomponente enthalten, ist das K-ETL-Verfahren, bei welchem das zu beschichtende Werkstück als Kathode geschaltet ist.

Die Härtung der Überzugsmittel erfolgt zwischen 120 und 180°C während 15 bis 30 Minuten, wobei bereits bei 130 bis 160°C optimale Beständigkeitswerte der Lackfilme erzielt werden können.

Die folgenden Beispiele sollen die Erfindung erläutern, ohen daß ihr Umfang dadurch beschränkt wird. Alle Mengenangaben sind, soweit nicht anders angegeben, Gewichtseinheiten und beziehen sich bei den Harzkomponenten auf Festharz.

In den Beispielen werden die folgenden Abkürzungen für die eingesetzten Rohstoffe benützt:

| | |
|---|---|
| ACEE | Acetessigsäureethylester |
| MDM | Malonsäuredimethylester |
| MDE | Malonsäurediethylester |
| MDIP | Malonsäurediisopropylester |
| MDBE | Malonsäure-di-n-butylester |

| | |
|---|---|
| MEBE | Malonsäure-ethyl-n-butylester |
| PG | Propylenglykol-1,2 |
| NPG | Neopentylglykol |
| BD | Butandiol-1,4 |
| HD | Hexandiol-1,6 |
| TPG | Tripropylenglykol |
| CAP | Polycaprolactondiol (Molgew. ca. 200) |
| D22 | 1,1'-Isopropyliden-bis-(p-phenylen-oxy)-di-ethanol-2 (DIANOL 22) |
| TMP | Trimethylolpropan |
| CE | Glycidylester einer $C_9$—$C_{11}$-tert-Monocarbonsäure |
| MEOLA | Monoethanolamin |
| DOLA | N,N-Diethanolamin |
| EHA | 2-Ethylhexylamin |
| HMDA | Hexamethylendiamin-1,6 |
| IPDA | Isophorondiamin |
| DCHA | Dicyclohexylamin |
| DETA | Diethylentriamin |
| DEAPA | N,N-Diethylpropandiamin-1,3 |
| DEA | Diethylamin |
| FA | Formaldehyd (100%) eingesetzt als Paraformaldeyd, 91% |
| ECT | Ethylencarbonat |
| PCT | Propylencarbonat |
| TDI | Toluylendiisocyanat (handelsübliches 80/20-Isomerengemisch) |
| DMPS | Dimethylolpropionsäure |
| AMS | Ameisensäure |
| PIP | Piperidin |
| C1 | Umsetzungsprodukt aus äquimolaren Mengen CE und DOLA |
| C2 | Umsetzungsprodukt aus 1 Mol HMDA und 2 Mol ECT |
| C3 | Umsetzungsprodukt aus 1 Mol TDI und 2 Mol BD |
| C4 | Umsetzungsprodukt aus 1 Mol HMDA und 2 Mol PCT |
| C5 | Umsetzungsprodukt aus äquimolaren Mengen CE und DMPS |
| EGL | Ethylenglykolmonoethylether |
| BUGL | Ethylenglykolmonobutylether |

| | |
|---|---|
| DEGM | Diethylenglykoldimethylether |
| MIBK | Methylisobutylketon |
| PM | Propylenglykolmonomethylether (Methoxypropanol) |
| DMF | Dimethylformamid |
| INS | Isononansäure |
| AS | Adipinsäure |
| THPSA | Tetrahydrophthalsäureanhydrid |
| TOFS | Tallölfettsäure |
| HEOX | Hydroxyethyloxazolidin |

Beispiele 1—16

Aus den in der Tabelle 1 angegebenen Rohstoffen werden in nachstehend beschriebener Weise Vernetzungskomponenten von Typ (a1) hergestellt:

In einem geeigneten Reaktionsgefäß mit einer für das Azeotropverfahren geeigneten Einrichtung und einer Glockenbodenkolonne zur Abtrennung des bei der partiellen Umesterung bzw. Umamidierung gebildeten Alkohols wird zu einer Mischung aus der Esterkomponente und der Katalysatormischung (je 0,5 bis 1,0 Mol-%, bezogen auf Ester, von Piperidin und Ameisensäure) bei 70 bis 80°C portionsweise der Paraformaldehyd zugegeben, ohen daß die Temperatur durch die exotherme Reaktion max. 90°C überschreitet. Diese Temperatur wird gehalten, bis der Paraformaldehyd vollständig gelöst ist. Anschließend wird die Temperatur langsam auf 110 bis 120°C erhöht und das gebildete Reaktionswasser mit Hilfe eines geeigneten Schleppmittels aus dem Reaktionsgemisch entfernt. Nach Entfernen des Schleppmittels durch Anlegen eines Vakuums wird die Polyolkomponente bzw. Aminkomponente zugegeben und die Temperatur bis zum Einsetzen der Destillation (ca. 140 bis 180°C) erhöht. Die Abtrennung der Alkoholkomponente erfolgt vorzugsweise unter Verwendung einer Glockenbodenkolonne. Die erhaltenen Reaktionsprodukte weisen Festharzgehalte (120°C, 30 Minuten) zwischen 90 und 96% auf.

TABELLE 1

| Beispiel | Mol Diester | Mol $CH_2O$ | Mol Polyol | Ester-äquivalente | (1)OH-Zahl mg KOH/g | Grenz-viskositätszahl 20°C, DMF | Brechungsindex n 20/D |
|---|---|---|---|---|---|---|---|
| 1 | 1 MDM | 0,5 | 0,2 PG | 48 | unter 5 | 2,1 | 1,4632 |
| 2 | 1 MDE | 0,5 | 0,4 NPG | 84 | unter 5 | 3,5 | 1,4515 |
| 3 | 1 MDE | 0,5 | 0,4 HD | 87 | 9 | 6,6 | 1,4623 |
| 4 | 1 MDE | 0,5 | 0,4 TPG | 102 | 15 | 8,5 | 1,4569 |
| 5 | 1 MDE | 0,5 | 0,4 CAP | 173 | 15 | 11,9 | 1,4680 |
| 6 | 1 MDM | 0,5 | 0,2 C1 | 92 | 8 | 3,8 | 1,4645 |
| 7 | 1 MDM | 0,5 | 0,4 D22 | 113 | 10 | 8,2 | 1,4990 |
| 8 | 1 MDE | 0,5 | 0,2 TMP | 108 | 6 | 6,95 | 1,4642 |
| 9 | 1 MDE | 0,5 | 0,3 C2 | 113 | unter 5 | 6,5 | 1,4643 |
| 10 | 1 MDIP | 0,5 | 0,3 PG | 91 | unter 5 | 2,3 | 1,4452 |
| 11 | 1 MDBE | 0,75 | 0,4 PG | 105 | 17 | 2,8 | 1,4608 |
| 12 | 1 MDE | 0,90 | 0,3 PG | 83 | unter 5 | 5,2 | 1,4670 |
| 13 | 1 MDE | 0,50 | 0,3 C3 | 122 | 10 | 7,7 | 1,4995 |
| 14 | 1 MEBE | 0,50 | 0,3 C4 | 128 | unter 5 | 3,5 | 1,4619 |
| 15 | 1 MDE | 0,50 | 0,4 C5 | 143 | 2 | 11,6 | 1,4565 |
| 16 | 1 MDE | 0,50 | 0,1 DEAPA | 96 | 0 | 3,5 | 1,4588 |

w1) g Harz/1 Estergruppe

Beispiele 17—25

Aus den in der Tabelle 2 angegebenen Rohstoffen werden in nachstehend beschriebener Weise Vernetzungskomponenten von Typ (a2) hergestellt:

In einem geeigneten Reaktionsgefäß mit einer für das Azeotropverfahren geeigneten Einrichtung und einer Glockenbodenkolonne zur Abtrennung der bei der partiellen Umesterung bzw. Umamidierung gebildeten Alkohole wird die Mischung aus Ester und Umesterungs- bzw. Umamidierungskomponente auf 120°C erwärmt und bei einer bis 180°C steigenden Temperatur der aus dem Ester freigesetzte Alkohol über die Glockenbodenkolonne abgetrennt. Der Reaktionsverlauf wird durch die Destillatmenge kontrolliert. Die Bestimmung des Brechungsindexes des Reaktionsgemisches erlaubt ebenfalls die Verfolgung des Reaktionsverlaufes in einfacher Weise.

Nach Kühlen auf 60°C wird dem Ansatz die Katalysatormischung und anschließend der Paraformaldehyd in Portionen zugesetzt, wobei die Temperatur durch die auftretende Exothermie 90°C nicht überschreiten soll. Nachdem der Paraformaldehyd gelöst ist, wird die Temperatur auf 100°C gesteigert und so lange gehalten, bis der Gehalt an freiem Formaldehyd auf unter 0,5% gesunken ist. Anschließend wird das gebildete Reaktionswasser mit einem Schleppmittel, z.B. einer Benzinfraktion mit entsprechendem Siederbereich, aus der Reaktionsmasse entfernt. Nach Abziehen des Schleppmittels unter Vakuum wird die Temperatur weiter gehalten, bis die Enddaten erreicht sind. Die Reaktionsprodukte weisen nach 30-minütiger Trocknung bei 120°C einen Festkörpergehalt von über 90% auf.

TABELLE 2

| Beispiel | Ester Mole | Reaktions-Partner Mole | Formaldehyd Mole | Katalysator | Brechungs Index n 20/D | Grenzviskositätszahl 20°C/DMF | Esteräqui Valente[(2)] |
|---|---|---|---|---|---|---|---|
| 17 | 1 MDE | 0,2 NPG | 1 FA | 10 mM PIP<br>10 mM AMS | 1,4670 | 3,7 | 87 |
| 18 | 1 MDM | 0,2 NPG | 0,5 FA | 2,5% Addukt[(1)] | 1,4645 | 3,0 | 74 |
| 19 | 1 MDM | 0,2 PG | 0,5 FA | 4 mM PIP/AMS | 1,4627 | 2,6 | 71 |
| 20 | 1 MDE | 0,3 D22 | 1 FA | 1 mM PIP/AMS | 1,4993 | 3,8 | 131 |
| 21 | 1 MDE | 0,2 TMP | 1 FA | 10mMPIP/AMS | 1,4670 | 6,2 | 89 |
| 22 | 1 MDM | 0,2 IPDA | 1 FA | 2 mM DCHA<br>2 mM AMS | 1,4759 | 4,0 | 106 |
| 23 | 1 MDE | 0,3 HD | 1 FA | 10mMPIP/AMS | 1,4686 | 4,5 | 186 |
| 24 | 1 MDE | 0,5 HD | 0,75 FA | 2 mM PIP/AMS | 1,4630 | 4,8 | 178 |
| 25 | 1 MDE<br>1 ACEE | 1 HD | 1 FA | 2 mM PIP/AMS | 1,4735 | 4,6 | 107 |

(1)Basisharz A 1 (siehe später) neutralisiert mit 40 mMol Ameisensäure pro 100 g Festharz
(2)g Harz/1 Estergruppe

Verwendung der erfindungsgemäß hergestellten Vernetzungskomponenten

Die erfindungsgemäß hergestellten Vernetzungskomponenten werden mit verschiedenen Basisharzen unter den in der Tabelle 3 angegebenen Bedingungen kombiniert.

Die Komponenten werden in 70%iger Lösung in PM gemischt bzw. partiell reagiert.

Herstellung der Prüflacke

Aus den angeführten Bindemittelzusammensetzungen werden jeweils Proben von 100 g Festharz mit 29,5 g Titandioxid, 0,5 g Rußpigment, 17 g Aluminiumsilikat und 3 g basischem Bleisilikat vermahlen. Zusätzlich werden noch Umesterungskatalysatoren homogen eingemischt. Eingesetzt wird Bleioktoat mit einem wirksamen Metallgehalt von 0,5% bezogen auf Festharz.

Nach Dispergierung der Pigmente wird mit Ameisensäure neutralisiert und mit deionisiertem Wasser auf einen Feststoffgehalt von 15% verdünnt.

Für die Kombinationen 2, 8, 20 und 24 wird eine Weiß-Pigmentierung gewählt. 100 g Festharz, 37 g Titandioxid und 3 g basisches Bleisilikat werden vermahlen und 0,5% Pb-Metall in Form von Bleioktoat homogen eingemischt.

Prüfung der Acetonbeständigkeit

Die Acetonbeständigkeit wird durch Auflegen eines mit Aceton getränkten Wattebausches auf einen kathodisch abgeschiedenen, 30 Minuten bei 160°C eingebrannten, pigmentierten Lackfilm geprüft. Es wird die Zeit angegeben, nach welcher der Film durch Kratzen mit dem Fingernagal verletzt werden kann.

TABELLE 3

| Kombination | Teile Festharz Basisharz (A) | | Teile Festharz Vernetzungskomponente (B) | | Kombination A + B | Aceton-bestandigkeit in SEK |
|---|---|---|---|---|---|---|
| 1 | 70T | A6 | 30T | B1 | 2h 120°C | über 120 |
| 2 | 80T | A2 | 20T | B2 | 2h 120°C | 80 |
| 3 | 70T | A1 | 30T | B3 | 2h 100°C | 80 |
| 4 | 75T | A6 | 25T | B4 | 30 min. 60°C | 100 |
| 5 | 75T | A5 | 25T | B5 | 30 min. 60°C | 80 |
| 6 | 80T | A1 | 20T | B6 | 30 min. 60°C | 80 |
| 7 | 70T | A6 | 30T | B7 | 2h 120°C | über 120 |
| 8 | 80T | A2 | 20T | B8 | 2h 120°C | 70 |
| 9 | 70T | A5 | 30T | B9 | 1h 100°C | 110 |
| 10 | 70T | A6 | 30T | B10 | 2h 120°C | über 120 |
| 11 | 80T | A3 | 20T | B11 | 1h 100°C | 50 |
| 12 | 70T | A1 | 30T | B12 | 2h 120°C | über 120 |
| 13 | 75T | A6 | 25T | B13 | 2h 100°C | 100 |
| 14 | 70T | A4 | 30T | B14 | 30 min. 60°C | 100 |
| 15 | 80T | A3 | 20T | B15 | 30 min. 60°C | 50 |
| 16 | 80T | A1 | 20T | B16 | 1h 100°C | 60 |
| 17 | 70T | A1 | 30T | B17 | 2h 120°C | 120 |
| 18 | 70T | A4 | 30T | B18 | 1h 100°C | 120 |
| 19 | 75T | A3 | 25T | B19 | 30 min. 60°C | 50 |
| 20 | 75T | A2 | 25T | B20 | 2h 110°C | 90 |
| 21 | 75T | A5 | 25T | B21 | 2h 120°C | 100 |
| 22 | 75T | A6 | 25T | B22 | 30 min. 60°C | 60 |
| 23 | 80T | A6 | 20T | B23 | 2h 120°C | 110 |
| 24 | 80T | A2 | 20T | B24 | 2h 120°C | 120 |
| 25 | 70T | A1 | 30T | B25 | 30 min. 60°C | 60 |
| 26 | 75T | A7 | 25T | B8 | 1h 120°C | 120 |

Die als Basisharze eingesetzten Produkte werden wie folgt hergestellt. Als MEQ-Wert wird die Summe unreagierter Epoxidgruppen und Amingruppen in Milliäquivalenten pro 1 g des Musters (Festharz) bezeichnet.

*Basisharz A1*: 190 g eine Bisphenol-A-Epoxidharzes (1 Epoxidäquivalent) und 1425 g eines Bisphenol-A-Epoxidharzes (3 Epoxidäquivalente) werden bei 100°C in 597 g EGL gelöst. Die Lösung wird auf 60°C gekühlt und mit 126 g DOLA versetzt. Man steigert die Temperatur während 2 Stunden langsam auf 80°C. Anschließend werden 169 g DEAPA zugegeben und die Temperatur in 2 Stunden auf 120°C gesteigert. Bei dieser Temperatur werden 478 g CE zugegeben und anschließend 5 Stunden bei 130°C unter Rühren belassen. Man verdünnt mit EGL auf 65% Harzgehalt. Das Festharz hat eine Aminzahl von 91 mg KOH/g und eine Hydroxyzahl von 265 mg KOH/g.

*Basisharz A2*: 2 g Azobisisobutyronitril werden in 40 g Isopropanol unter Erwärmen gelöst. Zur klaren Lösung wird bei Rückflußtemperatur (ca. 84°C) ein Monomerangemisch, bestehend aus 20 g Glycidylmethacrylat, 20 g Hydroxyethylmethacrylat, 20 g Methylmethacrylat und 40 g 2-Ethylhexylacrylat, in dem 2 g Azobisisobutyronitril klar gelöst sind, während 2 Stunden gleichmäßig zugegeben. Die Reaktionsmasse wird weitere 3 Stunden bei Rückflußtemperatur gerührt. Eine homogene Lösung von 16 g Diisopropanolamin in 20 g BUGL wird der Reaktionsmasse bei 85°C rasch zugegeben, anschließend wird 2 Stunden bei 90°C nachgerührt. Das Produkt wird bei 90°C mit 13 g EGL und bei 40°C mit 10 g Aceton verdünnt.

Das Harz hat einen Festharzgehalt von 57%, eine Aminzahl von 58 mg KOH/g und eine Hydroxylzahl von 250 mg KOH/g.

*Basisharz A3*: 380 g eines Epoxidnovolakharzes (Epoxidäquivalent ca. 190) werden in 354 g DEGM gelöst und bei 80°C mit 269 g eines Halbesters aus THPSA und HEOX, sowie mit 37 g DEA und 140 g TOFS bis zu einer Säurezahl von unter 3 mg KOH/g umgesetzt. Anschließend wird das Harz nach Zusatz von 10 mM Essigsäure (3 normal) pro 100 g Festharz 3 Stunden bei 65°C gerührt. Das Produkt hat eine OH-Zahl entsprechend 270 mg KOH/g.

*Basisharz A4*: 1627 g (3,43 Val) eines Epoxidharzes auf Basis Bisphenol A (Epoxidäquivalentgewicht ca. 475) werden mit 226 g (0,24 COOH-Val) eines Polyesters aus 3 Mol TMP, 2 Mol AS, 1 Mol INS und 1 Mol THPSA (Säurezahl 65 mg KOH/g, Carboxyäquivalent 942 g) in 85%iger Lösung in PM bei 110°C bis zu einer Säurezahl von weniger als 5 mg KOH/g umgesetzt.

Nach Verdünnen des Ansatzes mit PM auf einen Festkörpergehalt von 70% erfolgt bei 60°C innerhalb von 2 Stunden die Zugabe einer Mischung von 94,5 (0,9 Val) DOLA, 67,5 g (0,9 Val) MEOLA, 78 g (1,2 Val) DEAPA und 240 g PM. Anschließend wird die Temperatur auf 90°C gesteigert und dieser Temperatur für eine Stunde gehalten. Dann wird der Festkörpergehalt mit PM auf 70% eingestellt.

*Basisharz A5*: 570 g (3 Val) eines Epoxidharzes auf Basis Bisphenol A (Epoxidäquivalent ca. 190) und 317 g PM werden auf 60°C erwärmt und innerhalb von 2 Stunden mit einer Mischung aus 116 g (0,9 Val) EHA und 163 g (0,15 NH-Val) eines polymeren Amins (siehe unten) versetzt und bis zu einem MEQ-Wert von 2,06 reagiert. Anschließend werden 1330 g (2,1 Val) einer 75%igen Lösung eines Bisphenol A-Epoxidharzes (Epoxidäquivalentgewicht 475) in PM zugegeben. Bei 60°C wird weiters innerhalb einer Stunde eine Lösung von 189 g (1,8 Val) DOLA in 176 g PM zugegeben und die Reaktion bis zu einem MEQ-Wert von 1,57 geführt. Nach weiterer Zugabe einer Lösung von 78 g (1,2 Val) DEAPA in 54 g PM innerhalb einer Stunde wird bei 60°C bis zu einem MEQ-Wert von 1,46 reagiert. Die Temperatur wird auf 90°C und anschließend innerhalb einer weiteren Stunde auf 120°C gesteigert. Bei Erreichen einer Viskosität (GARDNER-HOLDT: 6 g Harz + 4 g PM) von I—J wird mit PM auf einen Festkörpergehalt von 65% verdünnt. Das Produkt hat eine Aminzahl von 117 mg KOH/g und eine Hydroxylzahl von 323 mg KOH/g.

Das polymere Amin wird durch Umsetzung von 1 Mol DETA mit 3,1 Mol 2-Ethylhexylglycidylether und 0,5 Mol eines Bisphenol A-Epoxidharzes (Epoxidäquivalent ca. 190) in 80%iger PM-Lösung hergestellt. Das Produkt weist eine Viskosität (DIN 53211/20°C; 100 g Harz + 30 g PM) von 60—80 Sekunden auf.

*Basisharz A6*: Ein modifiziertes Epoxid-Amin-Addukt, wie es als Basisharz A4 beschrieben wurde, wird in der letzten Phase bei 90°C mit 5 Gew-% Polypropylenglykoldiglycidylether versetzt und bei 120°C bis zur Umsetzung aller Glycidylgruppen reagiert. Das Produkt weist eine Aminzahl von 76 mg KOH/g und eine Hydroxylzahl (prim. OH) von 89 mg KOH/g auf.

*Basisharz A7*: Zu einer Lösung von 570 g (3 Val) eines Bisphenol-A-Epoxidharzes in 173 g PM wird bei 60°C innerhalb von 2 Stunden eine Mischung aus 96,8 g (0,75 Val) EHA, 326 g (0,3 NH-Val) des in A5 eingesetzten polymeren Amins und 160 g PM zugegeben und bis zu einem MEQ-Wert von 2,15 reagiert. Anschließend werden 1330 g (2,1 Val) einer 75%igen Lösung eines Bisphenol-A-Epoxidharzes (EEW 475) in PM und bei 60°C innerhalb von 30 Min. 210 g (2 Val) DOLA zugegeben. Nach Erreichen eines MEQ-Wertes von 1,72 werden 138 g (0,5 NH-Val) eines Diketimins (s.u.), gelöst in 245 g PM zugesetzt und bis zu einem MEQ-Wert von 1,60 reagiert. Das Produkt hat einen Festkörpergehalt von 70% und eine Viskosität (GARDNER-HOLDT, 10 g Harz + 4 g PM) von L-M. Die Aminzahl beträgt 117 mg KOH/g.

Herstellung des Diketimins: 103 g DETA werden mit 200 g MIBK unter Entfernung von 36 g Wasser bei 120°C unter azeotroper Destillation reagiert. Das Lösungsmittel wird unter Vakuum entfernt. Das Reaktionsprodukt hat einen Brechungsindex n 20/D von 1,4672.

**Patentansprüche für die Vertragsstaaten: BE DE FR GB IT NL SE**

1. Vernetzungskomponenten für durch Umesterung und/oder Umamidierung vernetzbare Lackbindemittel, dadurch gekennzeichnet, daß sie

(a1) aus Verbindungen der Formel

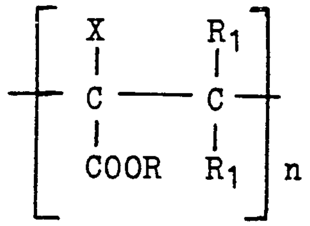

(I)

wobei

X —COOR, —CN oder —$COCH_3$

R eine Alkylgruppe mit 1 bis 8 C-Atomen

$R_1$ ein Wasserstoffatom oder einen Alkylrest und

n einen Faktor, welcher die Einheit bis zu einem Molekulargewicht zwischen 300 und 6000 vervielfacht, bedeutet,

durch partielle Umesterung mit 0,1 bis 1,4 Hydroxyläquivalenten eines zweiwertigen und/oder mehrwertigen Alkanols oder durch partielle Umamidierung mit 0,05 bis 1,0 NH-Äquivalenten eines primären und/oder sekundären Amins pro 1 Mol der Verbindung (I) oder

(a2) aus Verbindungen der Formel

$$X—CH_2—COOR \quad (II)$$

wobei X und R die oben angegebene Bedeutung haben, deren Estergruppen zu 5 bis 80% mit einem zweiwertigen und/oder mehrwertigen Alkanol partiell umgeestert oder mit einem zweiwertigen und/oder mehrwertigen Amin partiell umamidiert und die so erhaltenen Zwischenprodukt einer KNOEVENAGEL-Reaktion mit einer Carbonylverbindung unterworfen wurden, erhalten wurden,

wobei die nach (a1) und (a2) erhaltenen Produkte ein Molekulargewicht (Gewichtsmittel, ermittelt durch Gelpermeationschromatographie) zwischen 1000 und 8000 aufweisen.

2. Vernetzungskomponente nach Anspruch 1, dadurch gekennzeichnet, daß die Verbindungen gemäß Formel (I) und (II) als Rest X —COOR und als R einen Alkylrest mit 1 bis 4 C-Atomen aufweisen.

3. Vernetzungskomponente nach den Ansprüchen 1 und 2, dadurch gekennzeichnet, daß als Carbonylverbindung für die KNOEVENAGEL-Reaktion Formaldehyd, vorzugsweise als Paraformaldehyd eingesetzt wurde.

4. Vernetzungskomponenten nach den Ansprüchen 1 und 3, dadurch gekennzeichnet, daß sie in ihrer Struktur Urethan- und/oder Harnstoffgruppen aufweisen.

5. Verfahren zur Herstellung von Vernetzungskomponenten für durch Umesterung und/oder Umamidierung vernetzbare Lackbindemittel, dadurch gekennzeichnet, daß man

(a1) oligomere KNOEVENAGEL-Reaktionsprodukte der Formel

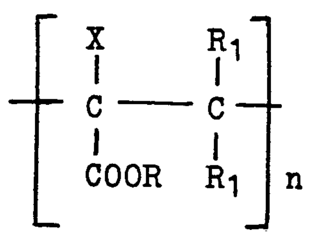

(I)

wobei

X —COOR, —CN oder —$COCH_3$

R eine Alkylgruppe mit 1 bis 8 C-Atomen

$R_1$ ein Wasserstoffatom oder einen Alkylrest und

n einen Faktor, welcher die Einheit bis zu einem Molekulargewicht zwischen 300 und 6000 vervielfacht, bedeutet,

bei 130 bis 185°C mit 0,1 bis 1,4 Hydroxyläquivalenten eines zweiwertigen und/oder mehrwertigen Alkanols umestert oder mit 0,05 bis 1,0 NH-Äquivalenten eines primären und/oder sekundären Amins pro Mol der Verbindung (I) umamidiert oder

(a2) 5 bis 80% der Estergruppen einer Verbindung

$$X{-}CH_2{-}COOR$$

wobei X und R die oben angegebene Bedeutung haben, bei 100 bis 200°C mit einem zweiwertigen und/oder mehrwertigen Alkanol umestert oder mit einem zweiwertigen oder mehrwertigen Amin umamidiert und die so erhaltenen Zwischenprodukte mit einer Carbonylverbindung im Sinne einer KNOEVENAGEL-Reaktion umsetzt und polymerisiert,
wobei sowohl nach (a1) als auch nach (a2) die Reaktion so geführt wird, daß die Produkte ein Molekulargewicht (Gewichtsmittel, ermittelt durch Gelpermeationschromatographie) zwischen 1000 und 8000 aufweisen.

6. Verfahren nach Anspruch 5, dadurch gekennzeichnet, daß man als Verbindungen der Struktur $X{-}CH_2{-}COOR$ bzw. zur Herstellung der oligomeren KNOEVENAGEL-Reaktionsprodukten (Formel I) Diester der Malonsäure mit Alkanolen mit bis 4 C-Atomen einsetzt.

7. Verfahren nach den Ansprüchen 5 und 6, dadurch gekennzeichnet, daß man als Carbonylverbindung bei der KNOEVENAGEL-Reaktion Formaldehyd, vorzugsweise Paraformaldehyd einsetzt.

8. Verwendung der Vernetzungskomponenten nach den Ansprüchen 1 bis 4 in Kombination mit Hydroxyl- und/oder primäre und/oder sekundäre Aminogruppen aufweisenden kationischen Harzen.

9. Verwendung der nach den Ansprüchen 1 bis 4 hergestellten Vernetzungskomponenten in einer mit dem kationischen Harz partiell vorkondensierten Form.

10. Kathodisch abscheidbare Elektrotauchlacke enthaltend als Bindemittel Mischungen oder partielle Kondensationsprodukte aus Hydroxyl- und/oder primäre und/oder sekundäre Aminogruppen aufweisenden Harzen und Vernetzungskomponenten gemäß einem oder mehreren der vorliegenden Ansprüche.

**Patentansprüche für den Vertragsstaat: ES**

1. Verfahren zur Herstellung von Vernetzungskomponenten für durch Umesterung und/oder Umamidierung vernetzbare Lackbindemittel, dadurch gekennzeichnet, daß man
(a1) oligomere KNOEVENAGEL-Reaktionsprodukte der Formel

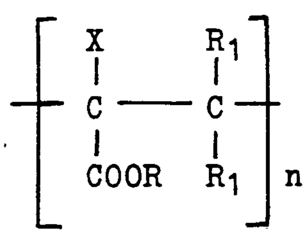

(I)

wobei
X —COOR, —CN oder $-COCH_3$
R eine Alkylgruppe mit 1 bis 8 C-Atomen
$R_1$ ein Wasserstoffatom oder einen Alkylrest und
n einen Faktor, welcher die Einheit bis zu einem Molekulargewicht zwischen 300 und 6000 vervielfacht,
bedeutet,
bei 130 bis 185°C mit 0,1 bis 1,4 Hydroxyläquivalenten eines zweiwertigen und/oder mehrwertigen Alkanols umestert oder mit 0,05 bis 1,0 NH-Äquivalenten eines primären und/oder sekundären Amins pro Mol der Verbindung (I) umamidiert oder
(a2) 5 bis 80% der Estergruppen einer Verbindung

$$X{-}CH_2{-}COOR$$

wobei X und R die oben angegebene Bedeutung haben, bei 100 bis 200°C mit einem zweiwertigen und/oder mehrwertigen Alkanol umestert oder mit einem zweiwertigen oder mehrwertigen Amin umamidiert und die so erhaltenen Zwischenprodukte mit einer Carbonylverbindung im Sinne einer KNOEVENAGEL-Reaktion umsetzt und polymerisiert,
wobei sowohl nach (a1) als auch nach (a2) die Reaktion so geführt wird, daß die Produkte ein Molekulargewicht (Gewichtsmittel, ermittelt durch Gelpermeationschromatographie) zwischen 1000 und 8000 aufweisen.

2. Verfahren nach Anspruch 1, dadurch gekennzeichnet, daß man als Verbindungen der Struktur $X{-}CH_2{-}COOR$ bzw. zur Herstellung der oligomeren KNOEVENAGEL-Reaktionsprodukten (Formel I) Diester der Malonsäure mit Alkanolen mit bis 4 C-Atomen einsetzt.

3. Verfahren nach den Ansprüchen 1 und 2, dadurch gekennzeichnet, daß man als Carbonylverbindung bei der KNOEVENAGEL-Reaktion Formaldehyd, vorzugsweise Paraformaldehyd einsetzt.

4. Verfahren nach den Ansprüchen 1 bis 3, dadurch gekennzeichnet, daß die eingesetzten mehrwertigen Alkanole oder Amine Urethan- und Harnstoffgruppen aufweisen.

5. Verwendung der Vernetzungskomponenten nach den Ansprüchen 1 bis 4 in Kombination mit Hydroxyl- und/oder primäre und/oder sekundäre Aminogruppen aufweisenden kationischen Harzen.

6. Verwendung der nach den Ansprüchen 1 bis 4 hergestellten Vernetzungskomponenten in einer mit dem kationischen Harz partiell vorkondensierten Form.

7. Kathodisch abscheidbare Elektrotauchlacke enthaltend als Bindemittel Mischungen oder partielle Kondensationsprodukte aus Hydroxyl- und/oder primäre und/oder sekundäre Aminogruppen aufweisenden Harzen und Vernetzungskomponenten gemäß einem oder mehreren der vorliegenden Ansprüche.

**Revendications pour les Etats contractants: BE DE FR GB IT NL SE**

1. Constituants de réticulation pour liants pour laques réticulables par transestérification et/ou transamidification, caractérisés en ce qu'ils ont été obtenus

(a1) à partir de composés de formule

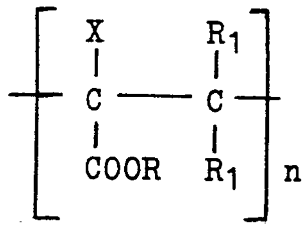

(I)

dans laquelle

X représente —COOR, —CN ou —$COCH_3$

R représente un groupe alkyle ayant 1 à 8 atomes de carbone

$R_1$ représente un atome d'hydrogène ou un reste alkyle et

n représente un facteur qui multiplie l'unité jusqu'à un poids moléculaire compris entre 300 et 6000, par transestérification partielle avec 0,1 à 1,4 équivalents d'hydroxyle d'un di- et/ou polyalcanol ou par transamidification partielle avec 0,5 à 1,0 équivalents NH d'une amine primaire et/ou secondaire par mole de composé (I) ou

(a2) à partir de composé de formule

$$X—CH_2—COOR \qquad (II)$$

dans laquelle X et R ont la signification indiquée ci-dessus, dont les groupes ester sont partiellement transestérifiés avec un di- et/ou polyalcanol ou sont partiellement transamidifiés avec une di- et/ou polyamine à raison de 5 à 80%, et les produits intermédiaires ainsi obtenus ayant été soumis à une réaction de KNOEVENAGEL avec un composé carbonylé,

les produits obtenus après (a1) et (a2) présentant un poids moléculaire (moyen en poids, déterminé par chromatographie par perméation de gel) compris entre 1000 et 8000.

2. Constituants de réticulation selon la revendication 1, caractérisés en ce que les composés selon les formules (I) et (II) présentant comme reste —COOR et comme R un reste alkyle ayant de 1 à 4 atomes de carbone.

3. Constituants de réticulation selon les revendications 1 et 2, caractérisés en ce que le formaldéhyde, de préférence sous forme de paraformaldéhyde, a été utilisé comme composé carbonyle pour la réaction de KNOEVENAGEL.

4. Constituants de réticulation selon les revendications 1 à 3, caractérisés en ce qu'ils présentent dans leur structure des groupes uréthane et/ou urée.

5. Procédé de préparation de constituants de réticulation pour liants pour laques réticulables par transestérification et/ou transamidification, caractérisé en ce que

(a1) l'on transestérifie des produits de réaction de KNOEVENAGEL oligomères de formule

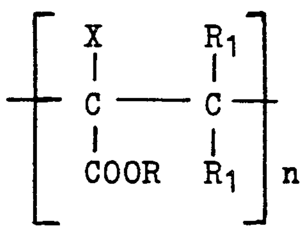

(I)

dans laquelle

X représente —COOR, —CN ou —$COCH_3$

R représente un groupe alkyle ayant 1 à 8 atomes de carbone

$R_1$ représente un atome d'hydrogène ou un reste alkyle et

n représente un facteur qui multiplie l'unité jusqu'à un poids moléculaire compris entre 300 et 6000, entre 130 et 185°C avec 0,1 à 1,4 équivalents d'hydroxyle d'un di- et/ou polyalcanol, ou on les transamidifie avec 0,05 à 1,0 équivalents NH d'une amine primaire et/ou secondaire par mole de composé (I) ou

(a2) l'on transestérifie 5 à 80% des groupes ester d'un composé

$$X—CH_2—COOR$$

dans laquelle X et R ont la signification indiquée ci-dessus, avec un di- et/ou polyalcanol entre 100 et 200°C, ou un les transamidifie avec une di- ou polyamine, et l'on fait réagir et polymérise les produits intermédiaires ainsi obtenus avec un composé carbonylé dans le sens d'une réaction de KNOEVENAGEL, la réaction étant conduite après (a1) et également après (a2) de telle façon que les produits présentent un poids moléculaire (moyen en poids, déterminé par chromatographie per perméation de gel) compris entre 1000 et 8000.

6. Procédé selon la revendication 5, caractérisé en ce que l'on utilise comme composés de structure $X—CH_2—COOR$ ou pour la préparation des produits de réaction de KNOEVENAGEL oligomères (formule I) des diesters de l'acide malonique avec des alcanols ayant 1 à 4 atomes de carbone.

7. Procédé selon les revendications 5 et 6, caractérisé en ce que l'on utilise comme composé carbonylé pour la réaction de KNOEVENAGEL le formaldéhyde, de préférence le paraformaldéhyde.

8. Utilisation des constituants de réticulation selon les revendications 1 à 4 en combinaison avec des résines cationiques présentant des groupes hydroxyle et/ou amine primaires et/ou secondaires.

9. Utilisation des constituants de réticulation préparés selon les revendications 1 à 4 sous une forme partiellement précondensée avec la résine cationique.

10. Laques pour trempage électrophorétique précipitables à la cathode contenant comme liants des mélanges ou des produits de condensation partielle de résines présentant des groupes hydroxyle et/ou amine primaires et/ou secondaires et des constituants de réticulation selon une ou plusieurs des revendications précédentes.

**Revendications pour l'Etat contractant: ES**

1. Procédé de préparation de constituants de réticulation pour liants pour laques réticulables par transestérification et/ou transamidification, caractérisé en ce que

(a1) l'on transestérifie des produits de réaction de KNOEVENAGEL oligomères de formule

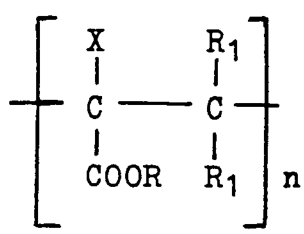

(I)

dans laquelle

X représente —COOR, —CN ou —$COCH_3$

R représente un groupe alkyle ayant 1 à 8 atomes de carbone

$R_1$ représente un atome d'hydrogène ou un reste alkyle et

n représente un facteur qui multiplie l'unité jusqu'à un poids moléculaire compris entre 300 et 6000, entre 130 et 185°C avec 0,1 à 1,4 équivalents d'hydroxyle d'un di- et/ou polyalcanol, ou on les transamidifie avec 0,05 à 1,0 équivalents NH d'une amine primaire et/ou secondaire par mole de composé (I) ou

(a2) l'on transestérifie 5 à 80% des groupes ester d'un composé

$$X—CH_2—COOR$$

dans laquelle X et R ont la signification indiquée ci-dessus, avec un di- et/ou polyalcanol entre 100 et 200°C, ou un les transamidifie avec une di- ou polyamine, et l'on fait réagir et polymérise les produits intermédiaires ainsi obtenus avec un composé carbonylé dans le sens d'une réaction de KNOEVENAGEL, la réaction étant conduite après (a1) et également après (a2) de telle façon que les produits présentent un poids moléculaire (moyen en poids, déterminé par chromatographie per perméation de gel) compris entre 1000 et 8000.

2. Procédé selon la revendication 1, caractérisé en ce que l'on utilise comme composés de structure $X—CH_2—COOR$ ou pour la préparation des produits de réaction de KNOEVENAGEL oligomères (formule I) des diesters de l'acide malonique avec des alcanols ayant 1 à 4 atomes de carbone.

3. Procédé selon les revendications 4 et 2, caractérisé en ce que l'on utilise comme composé carbonylé pour la réaction de KNOEVENAGEL le formaldéhyde, de préférence le paraformaldéhyde.

4. Procédé selon les revendications 1 à 3, caractérisé en ce que les polyalcanols utilisés présentant des groupes uréthane ou urée.

5. Utilisation des constituants de réticulation selon les revendications 1 à 4 en combinaison avec des résines cationiques présentant des groupes hydroxyle et/ou amine primaires et/ou secondaires.

6. Utilisation des constituants de réticulation préparés selon les revendications 1 à 4 sous une forme partiellement précondensée avec la résine cationique.

7. Laques pour trempage électrophorétique précipitables à la cathode contenant comme liants des mélanges ou des produits de condensation partielle de résines présentant des groupes hydroxyle et/ou amine primaires et/ou secondaires et des constituants de réticulation selon une ou plusieurs des revendications précédentes.

**Claims for the Contracting States: BE DE FR GB IT NL SE**

1. Crosslinked components for paint binders which can be crosslinked by transesterification and/or transamidation, characterized in that they have been obtained

(a1) from compounds of the formula

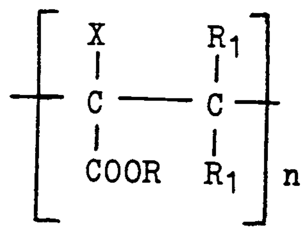

(I)

in which

X denotes —COOR, —CN or —$COCH_3$,

R denotes an alkyl group having 1 to 8 C atoms,

$R_1$ denotes a hydrogen atom or an alkyl radical and

n denotes a factor which multiplies the unit to give a molecular weight between 300 and 6000,

by partial transesterification with 0.1 to 1.4 hydroxyl equivalents of a dihydric and/or polyhydric alkanol or by partial transamidation with 0.05 to 1.0 NH equivalent of a primary and/or secondary amine per mole of the compound (I), or

(a2) from compounds of the formla

$$X—CH_2—COOR \qquad (II)$$

in which X and R have the meaning indicated above and the ester groups thereof, to the extent of 5 to 80%, have been partially transesterified with a dihydric and/or polyhydric alkanol or partially transamidated with a diamine and/or polyamine, and the intermediate products thus obtained have been subjected to a KNOEVENAGEL reaction with a carbonyl compound,

the products obtained in (a1) and (a2) having a molecular weight (weight average, determined by gel permeation chromatography) between 1000 and 8000.

2. Crosslinking component according to Claim 1, characterized in that the compounds according to formula (I) and (II) contain —COOR as the radical X and an alkyl radical having 1 to 4 C atoms as R.

3. Crosslinking component according to Claims 1 and 2, characterized in that formaldehyde, preferably in the form of paraformaldehyde, has been employed as the carbonyl compound for the KNOEVENAGEL reaction.

4. Crosslinking components according to Claims 1 to 3, characterized in that they contain urethane and/or urea groups in their structure.

5. Process for the preparation of crosslinking components for paint binders which can be crosslinked by transesterification and/or transamidation, characterized in that

(a1) oligomeric KNOEVENAGEL reaction products of the formula

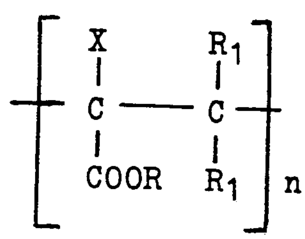

(I)

in which

X denotes —COOR, —CN or —$COCH_3$,
R denotes an alkyl group having 1 to 8 C atoms,
$R_1$ denotes a hydrogen atom or an alkyl radical and
n denotes a factor which multiplies the unit to give a molecular weight between 300 and 6000,
are transesterified at 130 to 185°C with 0.1 to 1.4 hydroxyl equivalents of a dihydric and/or polyhydric alkanol or are transamidated with 0.05 to 1.0 NH equivalent of a primary and/or secondary amine per mole of the compound (I), or

(a2) 5 to 80% of the ester groups of a compound

X—$CH_2$—COOR

in which X and R have the meaning indicated above, are transesterified at 100 to 200°C with a dihydric and/or polyhydric alkanol or are transamidated with a diamine or polyamine and the intermediate products thus obtained are reacted in the manner of a KNOEVENAGEL reaction with a carbonyl compound and are polymerized,
the reaction both in (a1) and in (a2) being carried out in such a manner that the products have a molecular weight (weight average, determined by gel permeation chromatography) between 1000 and 8000.

6. Process according to Claim 5, characterized in that diesters of malonic acid with alkanols having 1 to 4 C atoms are employed as compounds of the structure X—$CH_2$—COOR or for the preparation of the oligomeric KNOEVENAGEL reaction products (formula I).

7. Process according to Claims 5 and 6, characterized in that formaldehyde, preferably paraformaldehyde, is employed as the carbonyl compound in the KNOEVENAGEL reaction.

8. Use of the crosslinking components according to Claims 1 to 4 in combination with cationic resins containing hydroxyl groups and/or primary and/or secondary amino groups.

9. Use of the crosslinking components prepared in accordance with Claims 1 to 4 in a partially precondensed form with the cationic resin.

10. Cathodically depositable electrodeposition paints containing, as binders, mixturers or partial condensation products of resins containing hydroxyl groups and/or primary and/or secondary amino groups, and crosslinking components according to one or more of the present claims.

**Claims for the Contracting State: ES**

1. Process for the preparation of crosslinking components for paint binders which can be crosslinked by transesterification and/or transamidation, characterized in that

(a1) oligomeric KNOEVENAGEL reaction products of the formula

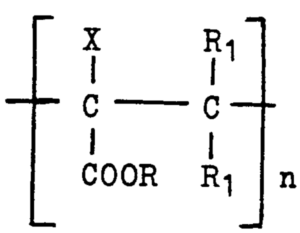

(I)

in which
X denotes —COOR, —CN or —$COCH_3$,
R denotes an alkyl group having 1 to 8 C atoms,
$R_1$ denotes a hydrogen atom or an alkyl radical and
n denotes a factor which multiplies the unit to give a molecular weight between 300 and 6000,
are transesterified at 130 to 185°C with 0.1 to 1.4 hydroxyl equivalents of a dihydric and/or polyhydric alkanol or are transamidated with 0.05 to 1.0 NH equivalent of a primary and/or secondary amine per mole of the compound (I), or

(a2) 5 to 80% of the ester groups of a compound

X—$CH_2$—COOR

in which X and R have the meaning indicated above, are transesterified at 100 to 200°C with a dihydric and/or polyhydric alkanol or are transamidated with a diamine or polyamine and the intermediate products thus obtained are reacted in the manner of a KNOEVENAGEL reaction with a carbonyl compound and are polymerized,
the reaction both in (a1) and in (a2) being carried out in such a manner that the products have a molecular weight (weight average, determined by gel permeation chromatography) between 1000 and 8000.

2. Process according to Claim 1, characterized in that diesters of malonic acid with alkanols having 1 to 4 C atoms are employed as compounds of the structure X—$CH_2$—COOR or for the preparation of the oligomeric KNOEVENAGEL reaction products (formula I).

3. Process according to Claims 1 and 2, characterized in that formaldehyde, preferably paraformaldehyde, is employed as the carbonyl compound in the KNOEVENAGEL reaction.

4. Process according to Claims 1 to 3, characterized in that the polyhydric alkanols or polyamines employed contain urethane or urea groups.

5. Use of the crosslinking components according to Claims 1 to 4 in combination with cationic resins containing hydroxyl groups and/or primary and/or secondary amino groups.

6. Use of the crosslinking components prepared in accordance with Claims 1 to 4 in a partially precondensed form with the cationic resin.

7. Cathodically depositable electrodeposition paints containing, as binders, mixturers or partial condensation products of resins containing hydroxyl groups and/or primary and/or secondary amino groups, and crosslinking components according to one or more of the present claims.